# EUROPEAN PATENT APPLICATION

(11) **EP 4 851 501 A1**
(43) Date of publication of application: **09.12.2026**
(21) Application number: 26182705.9
(22) Date of filing: 02.06.2026
(51) Int. Cl.: F16H 61/12, F16H 63/46, F16D 48/06, F16H 59/50, F16H 59/68, F16H 61/04

(54) **LEANING VEHICLE**

(30) Priority: 04.06.2025 JP 2025093744
(71) Applicant: Yamaha Hatsudoki Kabushiki Kaisha, Iwata-shi, Shizuoka 438-8501 (JP)
(72) Inventor: OHATA, Shinobu, Iwata-shi, Shizuoka, 438-8501 (JP)
(74) Representative: Stöckeler, Ferdinand

(57) **Abstract**

The present teaching aims to provide a leaning vehicle capable of maintaining drive for traveling even in a situation in which a malfunction occurs in an operation of the dog transmission due to inadequate regular maintenance or the like and carrying out upshift immediately after slip has been eliminated even in a special traveling situation in which a rear wheel slips in a special environment, such as racing. A control device of a leaning vehicle is configured to reduce transmitted driving force by controlling a clutch actuator when the control device does not detect slip of a rear wheel in upshift of the dog transmission and to stop the reduction of the transmitted driving force and recover the transmitted driving force when the disengagement of the dogs is not detected within a standard time limit from the start of an operation in a dog transmission, and the control device is configured to continue to reduce the transmitted driving force even when the disengagement of the dogs is not detected within the standard time limit from the start of the operation in the dog transmission when the slip of the rear wheel is detected in the upshift of the dog transmission.

## Description

### Technical Field

The present teaching relates to a leaning vehicle.

### Background Art

PTL 1 describes a motorcycle which is a leaning vehicle, for example. The motorcycle of PTL 1 includes a dog clutch automatic transmission. A control device of the dog clutch automatic transmission reduces torque of a power source when dogs are disengaged and recovers the reduced torque of the power source after the dog disengagement has been completed in gear shifting.

Further, PTL 1 describes a technique in which when the dog engagement is not completed, the reduced torque of the power source is recovered, and after a time interval from the torque recovery, the torque of the power source is reduced again.

### Citation List

### Patent Literature

PTL 1: WO 2023/112324

### Summary of Invention

### Technical Problem

The leaning vehicle is sometimes required to maintain drive for traveling even in a situation in which a malfunction occurs in an operation of a dog transmission due to inadequate regular maintenance or the like and to be able to carry out upshift immediately after slip has been eliminated even in a special traveling situation in which a rear wheel slips in a special environment, such as racing.

It is an object of the present teaching to provide a leaning vehicle capable of maintaining drive for traveling even in the situation in which a malfunction occurs in an operation of the dog transmission due to inadequate regular maintenance or the like and carrying out upshift immediately after slip has been eliminated even in a special traveling situation in which a rear wheel slips in a special environment, such as racing.

### Solution to Problem

For example, a malfunction sometimes occurs in an operation of the dogs due to wear of parts of a transmission or intrusion of foreign substances, for example, due to inadequate regular maintenance or the like. For example, there can arise a case in which, prior to the dog engagement described in PTL 1, even when the driving force decreases, the dog disengagement, i.e., release of the engagement of the dogs, cannot be performed. When the dogs cannot be disengaged due to a malfunction resulting from inadequate regular maintenance or the like in a normal traveling situation, the recovery from the reduction of the driving force of the engine is desired.

A traveling method for the leaning vehicle includes a method in which a rear wheel which is a driving wheel is caused to slip relative to the road surface. For example, when an off-road vehicle is cornering on a dirt road surface in a special environment, such as racing, there is power sliding in which the vehicle travels in a lean attitude while intentionally causing the rear wheel to slip with the throttle open. By causing the rear wheel to slip, the vehicle body orientation can be turned in a short time while suppressing a decrease in speed. Without being limited to the cornering, there is also a traveling method in which the speed is increased by outputting large driving force from a power source to the extent that the rear wheel is caused to slip.

The leaning vehicle is sometimes required to upshift even in a situation in which the rear wheel is slipping.

The rear wheel in the slip state is rotating while slipping relative to the road surface while being subjected to resistance caused by frictional force from the road surface and subjected to driving force overcoming this frictional force. A dog transmission transmits this driving force to the rear wheel. That is, transmitted driving force is applied to engaged dogs. The dogs of the dog transmission cannot be disengaged in such a state in which the transmitted driving force is applied.

The present inventors have conceived that when the dogs are not disengaged within a standard time limit in upshift of the dog transmission, switching a response according to the detection of a slip of a rear wheel makes it possible to maintain drive for traveling even in the situation in which a malfunction due to inadequate regular maintenance or the like occurs and to carry out upshift even in a special traveling situation in a special environment, such as racing.

More specifically, when the control device does not detect the slip of the rear wheel in the upshift of the dog transmission, the control device reduces the transmitted driving force by controlling the engine or the clutch actuator and when the disengagement of the dogs is not detected within the standard time limit from the start of the operation in the dog transmission, the control device stops the reduction of the transmitted driving force and recovers the transmitted driving force. Thus, even when a malfunction occurs in a function of the transmission and the dogs cannot operate, the driving force of the rear wheel is recovered. Therefore, the drive for traveling of the leaning vehicle is maintained.

When the slip of the rear wheel is detected in the upshift of the dog transmission, the control device continues to reduce the transmitted driving force even in a case in which the disengagement of the dogs is not detected within the standard time limit from the start of the operation in the dog transmission. The case in which the slip of the rear wheel is detected in the upshift situation is a case in which the leaning vehicle is in a special traveling situation, such as power sliding. When the rear wheel is slipping, the driving force overcoming the frictional force between the rear wheel and the road surface is transmitted as the transmitted driving force to the engaged dogs from the engine. In a period in which the rear wheel continues to rotate and slip due to its inertia even when the force transmitted from the engine decreases or disappears, the transmitted driving force from the rotating rear wheel is applied to the engaged dogs. Therefore, in the situation in which the rear wheel is slipping, the dogs cannot be disengaged until the slip of the rear wheel is eliminated. Then, when the slip of the rear wheel is eliminated, the dogs can be disengaged. The control device continues to reduce the transmitted driving force even when the disengagement of the dogs is not detected within the standard time limit, whereby the occurrence of a situation in which the reduction of the transmitted driving force is stopped, making the upshift impossible is suppressed even in a special situation in which the rear wheel slips. Therefore, even in the situation in which the rear wheel is slipping, the upshift can be carried out immediately after the slip of the rear wheel has been eliminated.

Thus, the drive for traveling is maintained even in the situation in which a malfunction occurs in an operation of the dogs due to inadequate regular maintenance or the like and the upshift can be carried out immediately after the slip of the rear wheel has been eliminated in a special traveling situation in which the rear wheel slips.

To achieve the above-described object, a leaning vehicle has the following configuration according to one aspect of the present teaching.
(1) A leaning vehicle including:
   an engine configured to output driving force;
   a front wheel;
   a rear wheel configured to rotate under the driving force of the engine;
   a clutch having a clutch actuator and configured to change the state between a connection state and a disconnection state by actuation of the clutch actuator;
   a dog transmission configured to upshift by engaging and disengaging dogs and transmit the driving force transmitted from the clutch as transmitted driving force to the rear wheel through the dogs, which have been engaged; and
   a control device configured to control the engine and the clutch actuator, in which
   the control device is configured to reduce the transmitted driving force by controlling the clutch actuator when the control device does not detect slip of the rear wheel in the upshift of the dog transmission and to stop the reduction of the transmitted driving force and recover the transmitted driving force when the disengagement of the dogs is not detected within a standard time limit from the start of an operation in the dog transmission, and
   when the slip of the rear wheel is detected in the upshift of the dog transmission, the control device is configured to continue to reduce the transmitted driving force even when the disengagement of the dogs is not detected within the standard time limit from the start of the operation in the dog transmission.

The leaning vehicle according to (1) includes the engine, the front wheel, the rear wheel, the clutch, the dog transmission, and the control device. The engine outputs the driving force. The rear wheel is a driving wheel. The rear wheel rotates under the driving force of the engine. The clutch has the clutch actuator. The clutch changes the state between the connection state and the disconnection state by actuation of the clutch actuator.

The dog transmission upshifts by engaging and disengaging the dogs. The dog transmission transmits the driving force of the engine as the transmitted driving force to the rear wheel through the engaged dogs.

The control device controls the engine and the clutch actuator. The control device is configured to reduce the transmitted driving force by controlling the clutch actuator when the control device does not detect the slip of the rear wheel in the upshift of the dog transmission and to stop the reduction of the transmitted driving force and recover the transmitted driving force when the disengagement of the dogs is not detected within the standard time limit from the start of the operation in the dog transmission. Thus, even when a malfunction occurs in a function of the dog transmission and the dogs cannot operate, the driving force of the rear wheel is recovered. Thus, the drive for traveling of the leaning vehicle is maintained.

When the slip of the rear wheel is detected in the upshift of the dog transmission, the control device continues to reduce the transmitted driving force even in a case in which the disengagement of the dogs is not detected within the standard time limit from the start of the operation in the dog transmission. The case in which the slip of the rear wheel is detected in the upshift situation is a case in which the rear wheel is slipping when the leaning vehicle is in a special traveling situation, such as power sliding. When the rear wheel is slipping, the transmitted driving force from the rotating rear wheel is applied to the engaged dogs in a period in which the rear wheel continues to rotate and slip due to its inertia even when the force transmitted from the engine decreases or disappears. Therefore, in the situation in which the rear wheel is slipping, the dogs cannot be disengaged until the slip of the rear wheel is eliminated. When the slip of the rear wheel is eliminated, the dogs can be disengaged. The reduction of the transmitted driving force continues even when the disengagement of the dogs is not detected within the standard time limit, thereby suppressing the occurrence of the situation in which the reduction of the transmitted driving force is stopped, making the upshift impossible even in a special situation in which the rear wheel slips. Therefore, even in the situation in which the rear wheel is slipping, the upshift can be carried out immediately after the slip of the rear wheel has been eliminated. Herein, carrying out the upshift immediately after the slip of the rear wheel has been eliminated means that, after the transmitted driving force for the upshift is reduced, the dogs are disengaged and the dogs corresponding to the next gear stage are engaged without undergoing a recovery of, and an increase in, the transmitted driving force.

Thus, according to (1), the drive for traveling is maintained even in a situation in which a malfunction occurs in an operation of the dog transmission and the upshift can be carried out immediately after the slip of the rear wheel has been eliminated in the special traveling situation in which the rear wheel slips.

In the description above, the description is given using an example of the power sliding which is easy to visually understand by the lean angle. However, in a special environment, such as racing, the configuration according to (1) can carry out the upshift even in a situation in which the speed is increased while causing the rear wheel to slip in an upright state, for example, without being limited to the power sliding accompanied by the lean state.

The vehicle can adopt the following configuration according to one aspect of the present teaching.

(2) The leaning vehicle according to (1), in which
when the slip of the rear wheel has been detected in the upshift of the dog transmission, the control device is configured to stop the reduction of the transmitted driving force and recover the transmitted driving force when the disengagement of the dogs is not detected within the standard time limit after the end of the slip has been detected.

When the slip of the rear wheel is detected in the upshift, the reduction of the transmitted driving force continues even when the disengagement of the dogs is not detected. However, there is also a case of a situation in which a malfunction actually occurs in an operation of the dog transmission.

According to (2), when the slip of the rear wheel has been detected in the upshift of the dog transmission, the reduction of the transmitted driving force is continued even when the disengagement of the dogs is not detected within the standard time limit, but, when the disengagement of the dogs is not detected within the standard time limit after the end of the slip has been detected, the reduction of the transmitted driving force is stopped. As a result, even in the special traveling situation in which the rear wheel slips, the drive for traveling can be ultimately maintained after the end of the slip in a situation in which a malfunction occurs in an operation of the dog transmission.

The vehicle can adopt the following configuration according to one aspect of the present teaching.

(3) The leaning vehicle according to (1) or (2), in which
when the slip of the rear wheel has been detected in the upshift of the dog transmission, the control device is configured to stop the reduction of the transmitted driving force and recover the transmitted driving force when the disengagement of the dogs is not detected within a second standard time limit longer than the standard time limit, even in a period in which the slip of the rear wheel is detected.

In a traveling situation in which the rear wheel is not slipping, the continuous reduction of the driving force for a long time is not desired. Also in the special traveling situation in which the rear wheel slips, the continuous reduction of the transmitted driving force for a long time is not desired in some cases. According to (3), even in a period in which the rear wheel is slipping, the reduction of the transmitted driving force is stopped when the dogs are not disengaged within the long second standard time limit. Therefore, when slip has been erroneously detected in a state in which no slip occurs due to measurement errors or the like, the reduction period of the transmitted driving force can be prevented from becoming excessive. Thus, even when a malfunction occurs in a function of the dog transmission in the upshift at the time of the slip, the time during which the driving force of the rear wheel decreases can be suppressed.

The vehicle can adopt the following configuration according to one aspect of the present teaching.

(4) The leaning vehicle according to any one of (1) to (3), in which
the control device is configured to stop the upshift of the dog transmission when a difference between the rotation speed of the front wheel and the rotation speed of the rear wheel is larger than a predetermined speed difference reference.

When the difference between the rotation speed of the front wheel and the rotation speed of the rear wheel is larger than the speed difference reference, the leaning vehicle is in a special operation situation different from ground travel, such as being mounted on a measuring device, and thus a recovery from a state corresponding to the slip of the rear wheel sometimes takes a long time. According to (4), the upshift can be stopped in such a special operation situation.

The vehicle can adopt the following configuration according to one aspect of the present teaching.

(5) The leaning vehicle according to any one of (1) to (4), in which
the dog transmission has a shift actuator controlled by the control device and is configured to upshift by engaging and disengaging the dogs with the power of the shift actuator and transmit the driving force of the engine as the transmitted driving force to the rear wheel through the dogs, which have been engaged, and
when the control device stops the reduction of the transmitted driving force, the control device is configured to also cause the shift actuator to stop the disengagement of the dogs.

According to (5), it can be suppressed that a situation occurs in which the shift actuator continues to generate power to drive the dogs which are not disengaged, when the reduction of the transmitted driving force is stopped.

The vehicle can adopt the following configuration according to one aspect of the present teaching.

(6) The leaning vehicle according to any one of (1) to (5), in which
the control device is configured to detect a case in which a difference between the speed of the front wheel and the speed of the rear wheel decreases faster than a predetermined speed as the slip of the rear wheel in the upshift of the dog transmission, and continue to reduce the transmitted driving force even when the disengagement of the dogs is not detected within the standard time limit from the start of the operation in the dog transmission.

According to (6), for example, even when a difference arises between the detected speed of the front wheel and the detected speed of the rear wheel due to a difference in the wear degree between tires of the front wheel and the rear wheel even in a state in which there is no slip, the presence or absence of the slip can be more precisely identified by the use of a reduction degree in the speed difference. Therefore, the special traveling situation in which the rear wheel slips can be more precisely identified, and the upshift can be carried out immediately after the rear wheel slip has been eliminated.

The terminology used herein is for defining particular embodiments only and is not intended to limit the teaching. The term "and/or" used herein includes any and all combinations of one or more of the associated listed constituent components. The terms "including", "comprising", or "having", and variations thereof used herein specify the presence of stated features, steps, operations, elements, components, and/or equivalents thereof, and can include one or more of steps, operations, elements, components, and/or their groups. The terms "attached", "connected", "coupled", and/or equivalents thereof as used herein are used in a broad sense, and include both of direct and indirect attachment, connection, and coupling. Further, "connected" and "coupled" are not limited to physical or mechanical connections or couplings but can include direct or indirect electrical connections or couplings. All terms (including technical and scientific terms) used herein have the same meaning as commonly understood by one of ordinary skill in the art to which the present teaching belongs unless otherwise defined herein. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This Description describes a novel leaning vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The leaning vehicle is a straddled vehicle configured to be able to turn in a lean attitude. The straddled vehicle is a vehicle type in which a driver sits astride a saddle. The leaning vehicle is configured to turn in an attitude leaning toward the center of a curve. This enables the vehicle configured to be able to turn in a lean attitude to counter the centrifugal force applied to the vehicle when turning. Examples of the leaning vehicle include an off-road motorcycle. The leaning vehicle is not particularly limited and may be an on-road type, a scooter type, a moped type, or even an automatic tricycle, for example. In the leaning vehicle, maneuverability is demanded, and therefore the responsiveness of forward motion to a starting operation is considered important.

The operation of the engine is that the engine outputs driving force generated by combustion as crankshaft torque and rotation speed.

The dog transmission includes a multi-stage transmission in which at least one driving gear is constantly engaged with a driven gear. The dog transmission of the present teaching includes a constantly engaged transmission in which all driving gears are engaged with a driven gear, and dogs corresponding to one gear stage are engaged with each other.

The dog transmission of the present teaching is, for example, of a type which performs shifting operations including upshifting and downshifting using the power of the shift actuator. In the case of this type, the shift actuator is controlled by a control device. The dog transmission is, for example, an automated manual transmission (AMT) shifting gears in response to a switch operation of a rider. However, the dog transmission of the present teaching is not particularly limited, and may be, for example, an automatic transmission AT performing a gear shifting operation according to the speed and the rotation speed of the engine of the leaning vehicle.

Further, the dog transmission of the present teaching is not particularly limited, and may be, for example, of a type which upshifts by engaging and disengaging dogs using an operating force of a rider. In the case of this type, the control device can detect the upshift of the dog transmission by an operation of a rider through a sensor provided in the dog transmission.

The time when the operation in the dog transmission using the operating force of a rider starts is the time when the rider starts to apply a load to a shift pedal, so that a disengaging force starts to be applied to the dogs. The control device can detect the start of the operation in the dog transmission with a sensor provided in the shift pedal, for example. The time when the operation in the dog transmission using the power of the shift actuator starts is the time when the control device supplies electric power for an operation to the shift actuator, for example.

The state of the clutch is changed between the connection state and the disconnection state. The state of the clutch includes an intermediate state between the connection state and the disconnection state. Changing the state of the clutch from the connection state includes bringing the state into the disconnection state or the intermediate state. An output of the clutch actuator changes the state of the clutch without driving the shifting operations of the dog transmission.

The reduction of the transmitted driving force transmitted by the dogs may be realized by changing the state of the clutch from the connection state or may be realized by reducing the driving force output by the engine.

The control device contains a computer including a central processing unit (CPU) executing programs and a memory storing the programs, for example. However, the control device is not particularly limited and may contain an electronic circuit not executing programs.

The standard time limit is the time set as the maximum time until the transmitted driving force decreases and the dogs in the dog transmission are disengaged in a general traveling situation in which the rear wheel is not slipping, for example. The standard time limit may be either a predetermined value or a value varying according to conditions, such as the traveling speed or the gear stage.

The slip of the rear wheel refers to the fact that the rear wheel rotates in the rotation direction in traveling while the rear wheel rubs against the ground.

The present teaching can provide a leaning vehicle which maintains the drive for traveling even in the situation in which a malfunction occurs in an operation of the dog transmission and carries out the upshift in the special traveling situation in which the rear wheel slips.

### Brief Description of Drawings

[FIG. 1] A side view illustrating a schematic configuration of a leaning vehicle according to a first embodiment.
[FIG. 2] A flowchart illustrating upshift control of the leaning vehicle illustrated in FIG. 1.
[FIG. 3] A time chart illustrating an upshift operation.
[FIG. 4] A time chart illustrating an upshift operation when there is an abnormality in a transmission in a slip state.
[FIG. 5] A flowchart illustrating upshift control of a leaning vehicle according to a second embodiment.
[FIG. 6] A time chart illustrating an upshift operation in the second embodiment.
[FIG. 7] A time chart illustrating an upshift operation in a third embodiment.

### Description of Embodiments

Hereinafter, embodiments of the present teaching are described with reference to the drawings.

### [First Embodiment]

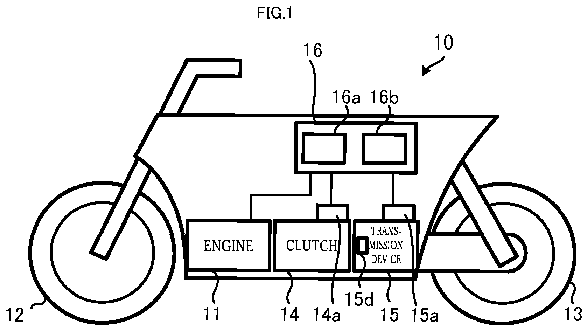

FIG. 1 is a side view illustrating a schematic configuration of a leaning vehicle according to a first embodiment.

A leaning vehicle 10 illustrated in FIG. 1 includes an engine 11, a front wheel 12, a rear wheel 13, a clutch 14, a dog transmission 15 (transmission), and a control device 16.

The engine 11 outputs driving force.

The rear wheel 13 is a driving wheel. The rear wheel 13 rotates under the driving force of the engine 11.

The clutch 14 has a clutch actuator 14a. The clutch 14 changes the state between a connection state and a disconnection state by actuation of the clutch actuator 14a.

The dog transmission 15 switches the gear stage. The dog transmission 15 upshifts by disengaging and engaging dogs 15d. The dog transmission 15 downshifts by disengaging and engaging the dogs 15d.

The dog transmission 15 transmits the driving force of the engine 11 as transmitted driving force to the rear wheel 13 through the engaged dogs 15d. The dog transmission 15 includes a shift actuator 15a, for example. The dog transmission 15 upshifts or downshifts by the actuation of the shift actuator 15a. An output of the shift actuator 15a actuates an operation of the dog transmission 15 without actuating an operation of the clutch 14.

The control device 16 controls the engine 11 and the clutch actuator 14a. The control device 16 also controls the shift actuator 15a.

The control device 16 contains a computer including a central processing unit (CPU) 16a executing programs and a memory 16b storing the programs. The central processing unit 16a controls the engine 11 and the clutch actuator 14a by reading and executing the programs stored in the memory 16b.

The control device 16 controls the engine 11 and the clutch actuator 14a. The control device 16 causes the shift actuator 15a to upshift or downshift the dog transmission 15 according to at least the rotation speed of the engine 11. This automatically switches the gear stage without relying on an operation of a rider. More specifically, the control device 16 causes the shift actuator 15a to upshift the dog transmission 15 based on a shift map in which at least the rotation speeds of the engine 11 and the gear stages are associated with each other.

The control device 16 can also upshift or downshift the dog transmission 15 in response to an operation of a rider, for example. The control device 16 causes the shift actuator 15a to upshift or downshift the dog transmission 15 in response to a shift switch operation by a rider, for example.

The control device 16 temporarily reduces the transmitted driving force transmitted by the dogs 15d when the dog transmission 15 upshifts or downshifts. More specifically, the control device 16 causes the clutch actuator 14a to change the state of the clutch 14 from the connection state to thereby reduce the transmitted driving force transmitted by the dogs 15d. Thus, the dogs 15d corresponding to a gear stage before the switch can be disengaged and the dogs 15d corresponding to a gear stage after the switch can be engaged.

The control device 16 in this embodiment reduces the transmitted driving force by controlling the clutch actuator 14a in a normal state in which the control device 16 does not detect the slip of the rear wheel 13 in the upshift of the dog transmission 15. Additionally, the control device 16 stops the reduction of the transmitted driving force and recovers the transmitted driving force when the disengagement of the dogs 15d is not detected within a standard time limit from the start of the operation in the dog transmission 15. Thus, even when a malfunction occurs in a function of the dog transmission 15 and the dogs 15d cannot operate, the driving force of the rear wheel 13 is recovered. Therefore, the drive for traveling of the leaning vehicle 10 is maintained.

When the slip of the rear wheel 13 is detected in the upshift of the dog transmission 15, the control device 16 continues to reduce the transmitted driving force even when the disengagement of the dogs 15d is not detected within the standard time limit from the start of the reduction of the transmitted driving force or the operation in the dog transmission 15.

The case in which the slip of the rear wheel 13 is detected in the upshift situation is a case in which the leaning vehicle 10 is in a special traveling situation, such as power sliding. When the rear wheel 13 is slipping, the transmitted driving force is applied to the engaged dogs 15d from the rotating rear wheel 13 in a period in which the rear wheel 13 continues to rotate and slip due to its inertia even when the power output from the engine 11 decreases or disappears. Therefore, in a situation in which the rear wheel 13 is slipping, the dogs 15d cannot be disengaged until the slip of the rear wheel 13 is eliminated. Then, when the slip of the rear wheel 13 is eliminated, the dogs 15d can be disengaged. The reduction of the transmitted driving force continues even when the disengagement of the dogs 15d is not detected within the above-described standard time limit, thereby suppressing the occurrence of the situation in which the reduction of the transmitted driving force is stopped, making the upshift impossible even in a special situation in which the rear wheel 13 slips. Therefore, even in the situation in which the rear wheel 13 is slipping, the upshift can be carried out immediately after the slip of the rear wheel 13 has been eliminated. Herein, carrying out the upshift immediately after the slip of the rear wheel 13 has been eliminated means that, after the transmitted driving force for the upshift is reduced, the dogs 15d are disengaged, and then the dogs 15d according to the next gear stage are engaged without undergoing a recovery of, and an increase in, the transmitted driving force.

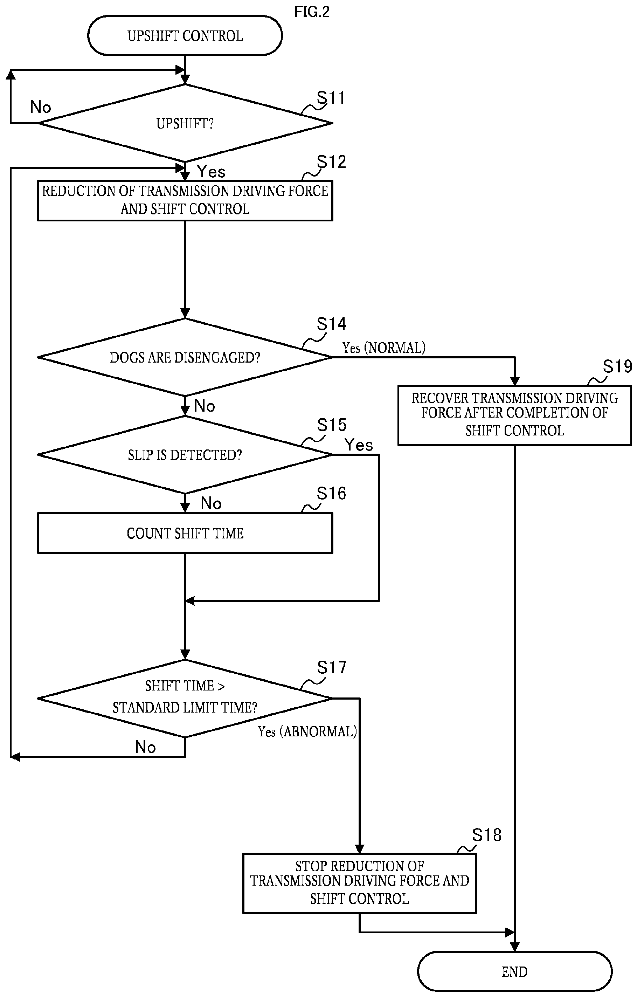

FIG. 2 is a flowchart illustrating upshift control of the leaning vehicle illustrated in FIG. 1.

The control device 16 reduces the transmitted driving force and performs shift control (S12) when upshifting (Yes in S11). The upshift is automatically performed according to the rotation speed of the engine 11, for example. However, the upshift may be performed in response to a switch operation of a rider, for example. The control device 16 controls the clutch actuator 14a to change the state of the clutch 14 from the connection state to either a disconnection state or a half-clutch state. Further, the control device 16 controls the shift actuator 15a to disengage the dogs 15d corresponding to the current gear stage in the dog transmission 15, and then engage the dogs 15d corresponding to the gear stage after the upshift.

The control device 16 detects whether the dogs 15d have been disengaged (S14). Whether the dogs 15d have been disengaged is detected by the rotation position of a shift cam provided in the dog transmission 15.

A case in which the disengagement of the dogs 15d has been detected (Yes in S14) means that the upshift of the dog transmission 15 is normally progressing by the actuation of the shift actuator 15a. In this case, the control device 16 ends the reduction of the transmitted driving force after the completion of the shift control and recovers the transmitted driving force (S19).

When the disengagement of the dogs 15d is not detected (No in S14), the control device 16 detects the slip of the rear wheel 13. When no slip of the rear wheel 13 is detected (No in S15), a shift time is counted (S16).

The control device 16 is configured to detect a case in which a difference between the speed of the front wheel 12 and the speed of the rear wheel 13 decreases faster than a predetermined speed as the slip of the rear wheel 13.

Further, the control device 16 determines a shift timeout (S17). When the shift time has exceeded the standard time limit (Yes in S17), the control device 16 determines that the disengagement of the dogs 15d is not detected within the standard time limit from the start of the operation in the dog transmission 15, and the operation of the dog transmission 15 is not normal. In this case, the control device 16 stops the reduction of the transmitted driving force and recovers the transmitted driving force (S18). Further, the control device 16 stops the shift control.

Thus, even when a malfunction occurs in a function of the dog transmission 15 and the dogs 15d are unable to perform the operation for shifting, the driving force of the rear wheel 13 is recovered. Therefore, the drive for traveling of the leaning vehicle 10 is maintained.

When the slip of the rear wheel 13 is detected in the above-described step S15 (Yes in S15), the control device 16 does not perform the count of the shift time (S16). The control device 16 starts counting the shift time after the slip has been eliminated (No in S15). Therefore, when the slip of the rear wheel 13 is detected, the control device 16 continues to reduce the transmitted driving force even when the disengagement of the dogs 15d is not detected within the standard time limit from the start of the operation in the dog transmission 15.

When the shift time has exceeded the standard time limit (Yes in S17) in a state in which the slip of the rear wheel 13 is detected once (Yes in S15), and then the slip is eliminated (No in S15) and the shift time is being counted (S16), the control device 16 determines that the disengagement of the dogs 15d is not detected within the standard time limit from the elimination of the slip, and the operation of the dog transmission 15 is not normal. In this case, the control device 16 stops the reduction of the transmitted driving force and recovers the transmitted driving force (S18).

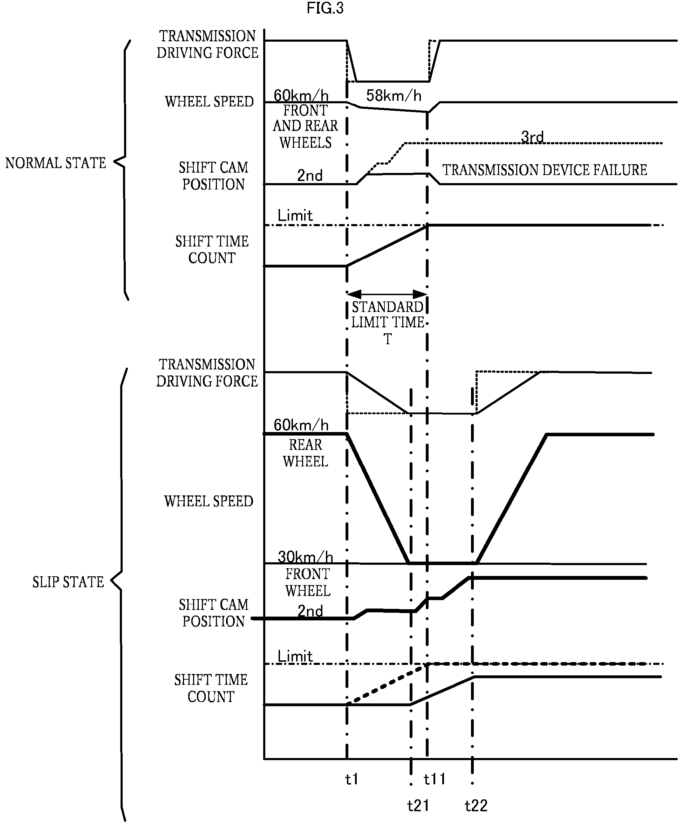

FIG. 3 is a time chart illustrating the upshift operation.

The time chart in FIG. 3 illustrates an operation of each part in each of a normal state in which the rear wheel 13 is not slipping and a slip state in which the rear wheel 13 is slipping.

The chart in FIG. 3 illustrates the transmitted driving force of the dogs 15d, the wheel speeds of the front and rear wheels, and the position of a shift cam as the specific operation of each part. The transmitted driving force is also the driving force applied to the rear wheel 13 through the dogs 15d. In addition to the transmitted driving force, a change in an instruction controlling the transmitted driving force is also illustrated. Moreover, the chart in FIG. 3 also illustrates the values of shift time count, time count after grip recovery, and slip time count. The position of the shift cam shows an example of the rotation position of the shift cam from the time when the dogs 15d corresponding to a gear stage before the upshift are disengaged to the time when the engagement of the dogs 15d corresponding to a gear stage after the upshift is completed. As an example to clarify the situation of the operation, the rotation position of the shift cam from the time when the dogs 15d corresponding to a second gear are disengaged to the time when the engagement of the dogs 15d corresponding to a third gear is completed is illustrated. In the operation in the normal state, the rotation position in the normal state until the engagement of the dogs 15d corresponding to the third gear is completed is indicated by the broken line and the rotation position in an abnormal state in which the dogs 15d corresponding to the second gear are not disengaged is indicated by the solid line. A step appearing in the middle of the rotation position of the shift cam shows an example of a position when the top faces of the dogs 15d corresponding to a third gear temporarily collide with each other before the dogs 15d are fitted. As an example of the wheel speed to make it easy to concretely imagine the wheel situation, values in terms of the traveling speed are illustrated.

### <Operation in normal state>

First, the operation in the normal state is described.

At timing t1, a series of operations for the upshift starts. First, the control device 16 outputs an instruction to reduce the transmitted driving force. The control device 16 controls the clutch actuator 14a to change the state of the clutch 14 from the connection state to either a disconnection state or a half-clutch state. This reduces the transmitted driving force of the dogs 15d.

In the example of the chart in FIG. 3, the front wheel 12 and the rear wheel 13 are rotating at 60 km/h before the upshift. The description is given using the values in terms of the traveling speed as the rotation speed. In the normal state, the front wheel 12 and the rear wheel 13 are rotating at substantially the same speed. Therefore, immediately after the connection state of the clutch 14 is changed, the transmitted driving force rapidly decreases to near zero in a short time. The decrease in the transmitted driving force to near zero enables the disengagement of the dogs 15d.

In the shift control, the control device 16 controls the shift actuator 15a to rotate the shift cam to thereby disengage the dogs 15d corresponding to the second gear, and then engage the dogs 15d corresponding to the third gear. When there is no abnormality in the dog transmission 15, the dogs 15d corresponding to the second gear are disengaged, and then the dogs 15d corresponding to the third gear are engaged as indicated by the broken line at the shift cam position.

However, when there is an abnormality in the dog transmission 15 in the normal state illustrated in FIG. 3, the dogs 15d corresponding to the second gear are not disengaged as indicated by the solid line at the shift cam position.

The control device 16 of the leaning vehicle 10 in this embodiment reduces the transmitted driving force by controlling the clutch actuator 14a in a case of the normal state and measures the time from the start of the operation in the dog transmission 15 by counting the shift time count. When the shift time count has reached the upper limit (Limit), the control device 16 determines that the disengagement of the dogs 15d is not detected within the standard time limit from the start of the operation in the dog transmission 15, and stops the reduction of the transmitted driving force and recovers the transmitted driving force. Thus, even when a malfunction occurs in a function of the dog transmission 15 and the dogs 15d cannot operate, the driving force of the rear wheel 13 is recovered. Therefore, the drive for traveling of the leaning vehicle 10 is maintained.

Moreover, when the control device 16 stops the reduction of the transmitted driving force, the control device 16 also causes the shift actuator 15a to stop the disengagement of the dogs 15d. It can be suppressed that a situation occurs in which the shift actuator 15a continues to generate power to drive the dogs 15d which are not disengaged when the reduction of the transmitted driving force is stopped.

### <Operation in slip state>

Next, an operation in the slip state is described.

At the timing t1, a series of operations for the upshift starts. The control device 16 reduces the transmitted driving force.

The rear wheel 13 in the slip state is rotating at a speed higher than that of the front wheel 12. The front wheel 12 is not slipping, and therefore reflects the actual traveling speed of the leaning vehicle 10. For example, before the upshift, the front wheel 12 is rotating at a speed in terms of a traveling speed of 30 km/h, and the rear wheel 13 is rotating at a speed in terms of a traveling speed of 60 km/h. At this time, the rear wheel 13 rotates at a speed higher than that of the front wheel 12 under frictional resistance from the road surface. When the rear wheel 13 is slipping, the transmitted driving force from the rotating rear wheel 13 is applied to the engaged dogs 15d in the period in which the rear wheel 13 continues to rotate and slip due to its inertia even when the driving force output from the engine 11 decreases or disappears.

Therefore, in the situation in which the rear wheel 13 is slipping, the dogs 15d cannot be disengaged until the slip of the rear wheel 13 is eliminated. When the slip of the rear wheel 13 is eliminated, the dogs 15d can be disengaged.

When the slip of the rear wheel 13 has been detected, the control device 16 does not count the shift time until the slip is not detected and starts counting the shift time after the slip has not been detected at timing t21 (solid line of the shift time count). Therefore, when the slip has been detected, the shift time does not exceed the upper limit (Limit) even after the standard time limit T has elapsed from the start of the reduction of the transmitted driving force. More specifically, in the slip state, even when the disengagement of the dogs 15d is not detected within the standard time limit, the reduction of the transmitted driving force continues. This suppresses the occurrence of the situation in which the reduction of the transmitted driving force is stopped, making the upshift impossible in the special situation in which the rear wheel 13 slips. Therefore, even in the situation in which the rear wheel 13 is slipping, the upshift can be carried out immediately after the slip of the rear wheel 13 has been eliminated (t21). More specifically, after the transmitted driving force has been reduced for the upshift at the timing t1, the dogs 15d can be disengaged, and then the dogs 15d corresponding to the next gear stage can be engaged without undergoing a recovery of the transmitted driving force.

This embodiment can maintain the drive for traveling even in the situation in which a malfunction occurs in an operation of the dog transmission 15 in the normal state and carry out the upshift immediately after the slip has been eliminated without interrupting the upshift operation in the slip state.

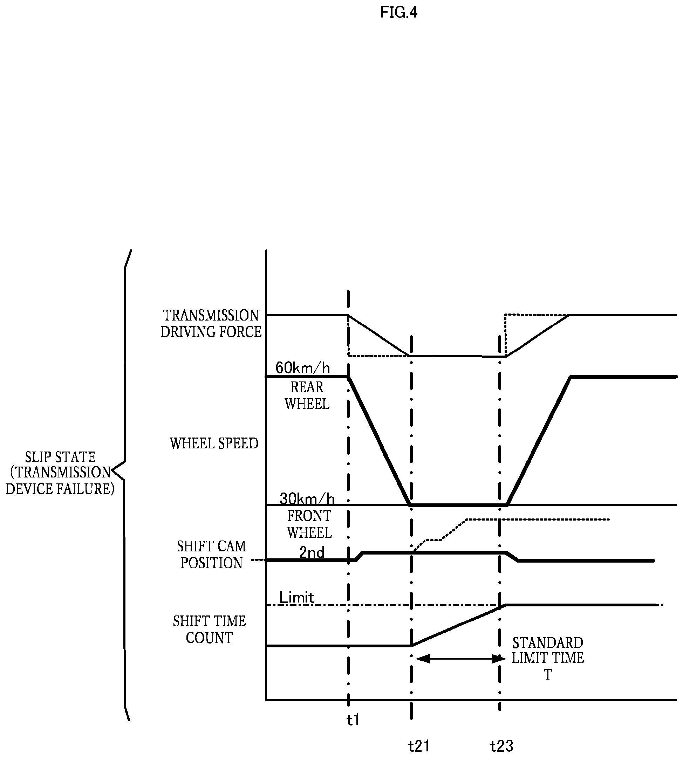

FIG. 4 is a time chart illustrating the upshift operation when there is an abnormality in the transmission in the slip state.

When the slip of the rear wheel 13 has been detected, the control device 16 does not count the shift time until the slip is not detected and starts counting the shift time after the slip has not been detected at the timing t21 as described above. When there is an abnormality in the dog transmission 15 and the dogs 15d cannot be disengaged even after the slip has been eliminated, the shift time count reaches the upper limit (Limit) after the elapse of the standard time limit T from the elimination of the slip. In this case, the control device 16 determines that the disengagement of the dogs 15d is not detected within the standard time limit T from the elimination of the slip, and stops the reduction of the transmitted driving force and recovers the transmitted driving force. Thus, even in the slip state and even in the case in which a malfunction occurs in a function of the dog transmission 15 and the dogs 15d cannot operate, the driving force of the rear wheel 13 is recovered. Therefore, the drive for traveling of the leaning vehicle 10 is maintained.

Further, when the control device 16 stops the reduction of the transmitted driving force, the control device 16 also causes the shift actuator 15a to stop the disengagement of the dogs 15d. It can be suppressed that the situation occurs in which the shift actuator 15a continues to generate power to drive the dogs 15d which are not disengaged when the reduction of the transmitted driving force is stopped.

### [Second Embodiment]

Next, a second embodiment is described.

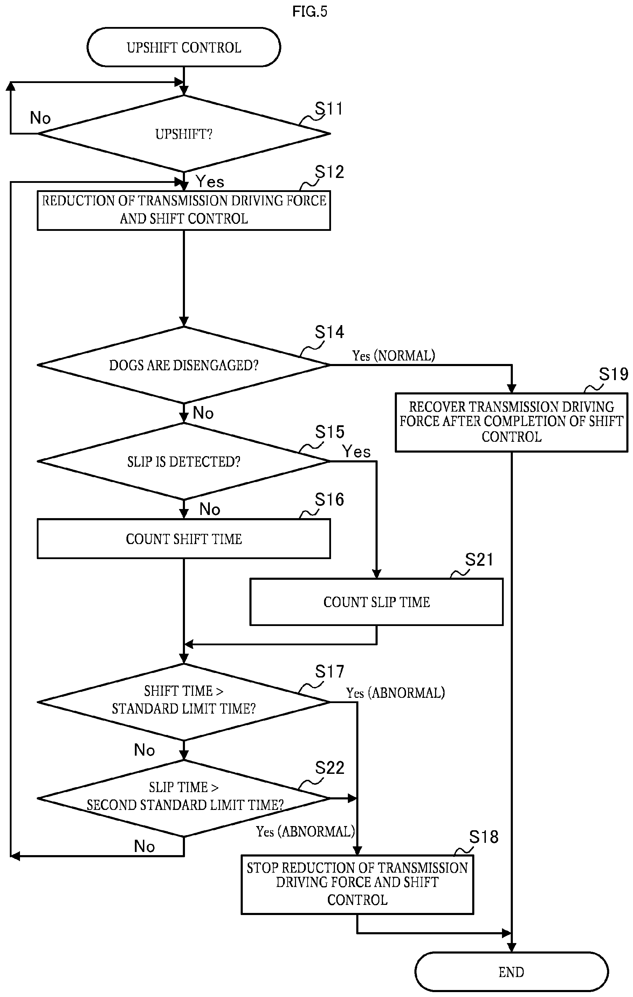

FIG. 5 is a flowchart illustrating upshift control of a leaning vehicle according to the second embodiment.

The control device 16 according to this embodiment counts the slip time when the slip of the rear wheel 13 has been detected (Yes in S15) (S21). Further, when the slip time has exceeded the second standard time limit (Yes in S22), the control device 16 determines that there is an abnormality in the dog transmission 15, and stops the reduction of the transmitted driving force and stops the shift control for recovering the transmitted driving force (S18). These points are different from the first embodiment. The other points in this embodiment are the same as those in the first embodiment. Therefore, the same reference signs are attached to elements common to those in the first embodiment and the descriptions thereof are omitted.

Even when the shift time does not exceed the standard time limit (No in S17), the control device 16 stops the reduction of the transmitted driving force when the count of the slip time has exceeded the second standard time limit (Yes in S22) (S18).

Even when slip is erroneously detected due to a difference in the wear degree between front and rear tires, measurement errors, or the like in a state in which no slip actually occurs, the reduction of the transmitted driving force is stopped when there is an abnormality in the dog transmission 15.

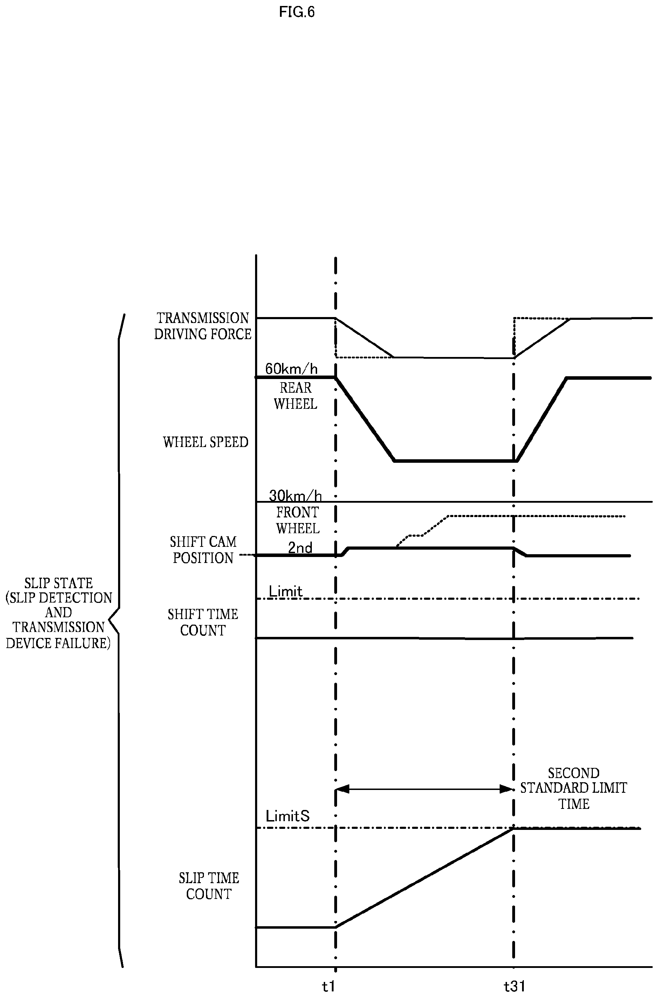

FIG. 6 is a time chart illustrating an upshift operation in the second embodiment.

In FIG. 6, although the slip is actually eliminated, the speed of the rear wheel 13 does not reflect the elimination of the slip due to measurement errors. The control device 16 is in a state in which the control device 16 has detected slip (Yes in S15 in FIG. 5). Also in this case, the slip time is counted, and when the count of the slip time exceeds the second standard time limit at timing t31, it is identified as an abnormality in the dog transmission 15, and the reduction of the transmitted driving force is stopped and the shift control is also stopped.

According to this embodiment, when slip is erroneously detected in a state in which no slip occurs due to measurement errors or the like, the reduction period of the transmitted driving force can be prevented from being excessive. Therefore, even when an abnormality occurs in the dog transmission 15 in the upshift at the time of the slip, the time during which the driving force of the rear wheel 13 is reduced can be suppressed.

### [Third Embodiment]

Next, a third embodiment is described.

The control device 16 according to this embodiment performs the reduction of the transmitted driving force and the shift control (S12) and counts the shift time. Further, the control device 16 identifies a case in which a difference between the speed of the front wheel 12 and the speed of the rear wheel 13 decreases faster than a predetermined speed as the detection of the slip of the rear wheel 13 (Yes in S15) in the detection of slip (S15 in FIG. 2 or FIG. 5), and resets the shift time to the initial value.

This point in this embodiment is different from the first embodiment or the second embodiment. The other points in this embodiment are the same as those in the first embodiment or the second embodiment. Therefore, the same reference signs are attached to elements common to those in the first embodiment or the second embodiment and the descriptions thereof are omitted.

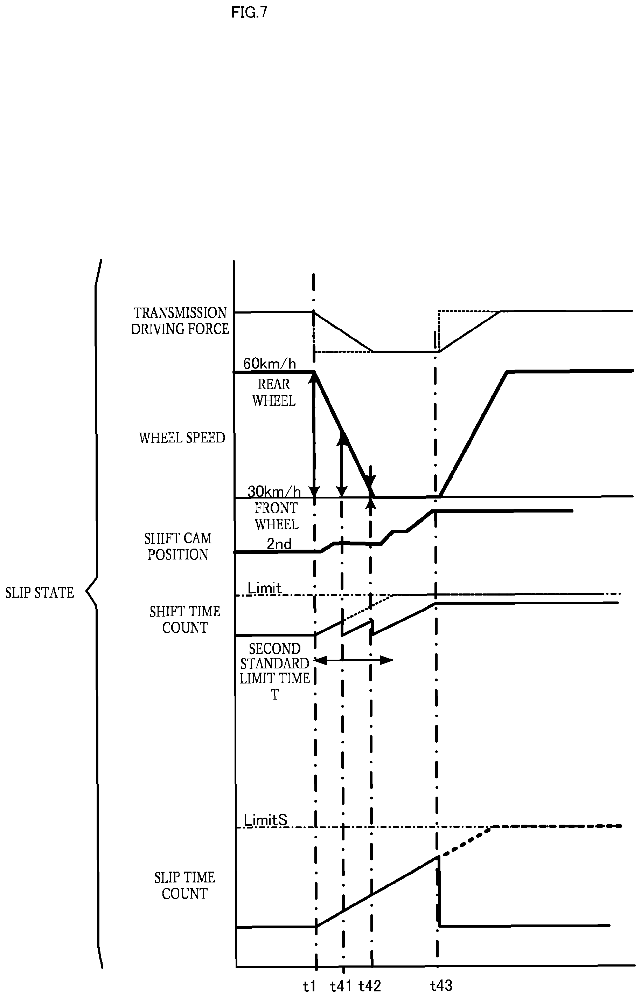

FIG. 7 is a time chart illustrating an upshift operation in the third embodiment.

After the reduction of the transmitted driving force starts at the timing t1, the shift time is counted and increases. However, at each of timing t41 and timing t42 after the timing t1, the difference between the speed of the front wheel 12 and the speed of the rear wheel 13 decreases as compared with the speed difference at the previous time. More specifically, the difference between the speed of the front wheel 12 and the speed of the rear wheel 13 is not constant and decreases faster than a predetermined speed. The control device 16 detects the slip of the rear wheel 13 at the timing t41 and the timing t42 (Yes in S15) and resets the shift time to the initial value.

Also in this embodiment, even when the disengagement of the dogs 15d is not detected within the standard time limit from the start of the reduction of the transmitted driving force or the operation in the dog transmission 15, the occurrence of the situation in which the reduction of the transmitted driving force is stopped, making the upshift impossible is suppressed even in the situation in which the rear wheel 13 slips as with the first embodiment. Further, when the standard time limit has elapsed after the elimination of the slip, the control device 16 stops the reduction of the transmitted driving force and recovers the transmitted driving force.

According to this embodiment, the slip is identified based on the decrease rate of the difference between the speed of the front wheel 12 and the speed of the rear wheel 13, and therefore, even when a difference arises between the detected speed of the front wheel 12 and the detected speed of the rear wheel 13 due to the difference in the wear degree between tires of the front wheel 12 and the rear wheel 13, the presence or absence of the slip can be more precisely identified.

### [Fourth Embodiment]

Next, a fourth embodiment is described.

The control device 16 according to the fourth embodiment stops upshift when the difference between the rotation speed of the front wheel 12 and the rotation speed of the rear wheel 13 is larger than a predetermined speed difference reference in the identification of upshift (S11).

This point in this embodiment is different from the first embodiment or the second embodiment. The other points in this embodiment are the same as those in the first embodiment or the second embodiment. Therefore, the same reference signs are attached to elements common to those in the first embodiment or the second embodiment and the descriptions thereof are omitted.

The leaning vehicle 10 is sometimes in a special operation situation different from ground travel, such as being mounted on a measuring device. In the case of measurement with the measuring device, it is sometimes determined that the slip of the rear wheel 13 occurs due to the difference between the rotation speed of the front wheel 12 and the rotation speed of the rear wheel 13. In the measurement with the measuring device, the difference between the rotation speed of the front wheel 12 and the rotation speed of the rear wheel 13 is sometimes larger than the difference in the case of the slip in ground travel, resulting in a prolonged recovery time from a state corresponding to the slip.

This embodiment can suppress the occurrence of a situation in which the shift actuator 15a continues to generate power to disengage the dogs 15d which are not disengaged when the reduction of the transmitted driving force is stopped.

### Reference Signs List

- 10: leaning vehicle
- 11: engine
- 12: front wheel
- 13: rear wheel
- 14: clutch
- 14a: clutch actuator
- 15: dog transmission
- 15a: shift actuator
- 15d: dog
- 16: control device

## Claims

1. A leaning vehicle (10) comprising:
an engine (11) configured to output driving force;
a front wheel (12);
a rear wheel (13) configured to rotate under the driving force of the engine (11);
a clutch (14) having a clutch actuator (14a) and configured to change a state between a connection state and a disconnection state by actuation of the clutch actuator (14a);
a dog transmission (15) configured to upshift by engaging and disengaging dogs (15d) and transmit the driving force transmitted from the clutch (14) as transmitted driving force to the rear wheel (13) through the dogs (15d), which have been engaged; and
a control device (16) configured to control the engine (11) and the clutch actuator (14a), wherein
the control device (16) is configured to reduce the transmitted driving force by controlling the clutch actuator (14a) when the control device (16) does not detect slip of the rear wheel (13) in the upshift of the dog transmission (15) and to stop the reduction of the transmitted driving force and recover the transmitted driving force when the disengagement of the dogs (15d) is not detected within a standard time limit from a start of an operation in the dog transmission (15), and
when the slip of the rear wheel (13) is detected in the upshift of the dog transmission (15), the control device (16) is configured to continue to reduce the transmitted driving force even when the disengagement of the dogs (15d) is not detected within the standard time limit from the start of the operation in the dog transmission (15).

2. The leaning vehicle (10) according to claim 1, wherein
when the slip of the rear wheel (13) has been detected in the upshift of the dog transmission (15), the control device (16) is configured to stop the reduction of the transmitted driving force and recover the transmitted driving force when the disengagement of the dogs (15d) is not detected within the standard time limit after an end of the slip has been detected.

3. The leaning vehicle (10) according to claim 1 or 2, wherein
when the slip of the rear wheel (13) has been detected in the upshift of the dog transmission (15), the control device (16) is configured to stop the reduction of the transmitted driving force and recover the transmitted driving force when the disengagement of the dogs (15d) is not detected within a second standard time limit longer than the standard time limit, even in a period in which the slip of the rear wheel (13) is detected.

4. The leaning vehicle (10) according to any one of claims 1 to 3, wherein
the control device (16) is configured to stop the upshift of the dog transmission (15) when a difference between a rotation speed of the front wheel (12) and a rotation speed of the rear wheel (13) is larger than a predetermined speed difference reference.

5. The leaning vehicle (10) according to any one of claims 1 to 4, wherein
the dog transmission (15) has a shift actuator (15a) controlled by the control device (16) and is configured to upshift by engaging and disengaging the dogs (15d) with power of the shift actuator (15a) and transmit the driving force of the engine (11) as the transmitted driving force to the rear wheel (13) through the dogs (15d), which have been engaged, and
when the control device (16) stops the reduction of the transmitted driving force, the control device (16) is configured to also cause the shift actuator (15a) to stop the disengagement of the dogs (15d).

6. The leaning vehicle (10) according to any one of claims 1 to 5, wherein
the control device (16) is configured to detect a case in which a difference between speed of the front wheel (12) and speed of the rear wheel (13) decreases faster than a predetermined speed as the slip of the rear wheel (13) in the upshift of the dog transmission (15), and continue to reduce the transmitted driving force even when the disengagement of the dogs (15d) is not detected within the standard time limit from the start of the operation in the dog transmission (15).
